# EUROPEAN PATENT SPECIFICATION

(11) **EP 3 131 817 B1**
(45) Date of publication and mention of the grant of the patent: **03.06.2020**
(21) Application number: 15779782.0
(22) Date of filing: 13.04.2015
(51) Int. Cl.: B64D 33/02

(54) **ENGINE INLET CONFIGURATION**
MOTOREINLASSKONFIGURATION
CONFIGURATION D'ENTRÉE DE MOTEUR

(30) Priority: 14.04.2014 US 201414252236
(43) Date of publication of application: 22.02.2017
(73) Proprietor: Sikorsky Aircraft Corporation, Stratford, CT 06615-9129 (US)
(72) Inventor: BOFILL, Steven, New Rochelle, NY 10805 (US); CHASEN, Scott A., Orange, Connecticut 06477 (US); SIMONETTI, Joseph Lawrence, Southbury, Connecticut 06488 (US); LAMB, Donald William Jr., North Haven, Connecticut 06473 (US)
(74) Representative: Schmitt-Nilson Schraud Waibel Wohlfrom Patentanwälte Partnerschaft mbB
(86) International application number: PCT/US2015/025507
(87) International publication number: WO 2015/160679

(56) References cited:
- EP-B1- 1 482 228
- EP-B1- 1 482 228
- US-A- 2 503 172
- US-A1- 2005 229 558
- US-A1- 2005 229 605
- US-A1- 2013 087 663
- US-A1- 2013 087 663
- US-A1- 2013 313 371
- US-A1- 2013 313 371
- US-B2- 8 096 499
- US-B2- 8 096 499

## Description

### BACKGROUND

The subject matter disclosed herein relates to a rotary winged aircraft with engine inlets, more specifically, to installation of engine inlet ducts and/or cowling.

Engines for, for example, aircraft such as helicopters or other rotorcraft utilize engine inlet ducting to direct airflow into the compressor of the engine. Some systems, for example, single engine systems, utilize a bifurcated inlet duct, which takes two airflow streams and directs them to the compressor inlet. The duct extends from an inlet located at a portion of the airframe such as the main rotor pylon (MRP) and extends through the MRP and airframe to an engine inlet at the engine front frame. The duct is typically secured directly and rigidly to the engine front frame at the duct outlet, and secured to the inlet at the MRP. Secured at each end, the inlet duct is held rigidly in place.

In some aircraft, however, the duct length is quite long making installation of the duct difficult due to manufacturing and assembly tolerance stackups between the engine front frame, the MRP and the inlet duct. Further, in some configurations, the inlet duct installation points may be inaccessible.

US 2013/0313371 A1 discloses an inlet duct for an engine or multiple engines includes two or more joining duct legs and a pressure relief pathway located at each duct leg to condition inlet airflow from the duct legs. US 2013/0313371 A1's method of operating an aircraft includes urging an inlet airflow into two or more duct openings disposed at a fuselage of the aircraft. The inlet airflow is urged through two or more converging inlet duct legs extending from the two or more duct openings toward an engine inlet. A portion of the inlet airflow is flowed from at least one inlet duct leg of the two or more inlet duct legs into a pressure relief pathway. An inlet duct for an engine or multiple engines includes one or more inlet duct legs and a bypass leg extending from an inlet duct leg of the one or more inlet duct legs through a bypass opening..

U.S. 8,096,499 discloses a device for feeding combustion air to an engine disposed in an interior of an aircraft is comprised of a primary air inlet duct extending between an exterior surface of the aircraft and the engine, wherein the air inlet duct extends from air inlets disposed in a first region of the exterior surface; at least two further air inlet ducts extending between a second and third region of the exterior surface and the engine, so as to provide a three-way combustion air supply; and a control device configured to switch the air supply to the engine from either or both of the at least two further air inlets duct when a blockage occurs in the primary air inlet.

US 2013/0087663 A1 discloses an inlet system for a rotorcraft includes a cowl door assembly and a plenum assembly. Its cowl door assembly includes a door member, a cowl inlet opening, and a cowl inlet duct, wherein the plenum assembly is configured to free float in relation to the cowl door. Its plenum assembly includes a plenum duct with a plenum band configured to attach the plenum assembly to an inlet opening. An aft seal is located between the aft plenum flange and a firewall, the aft seal being configured to provide a compressive contact between the plenum assembly and the firewall.

EP 1 482 228 B1 discloses fireproof seal comprises 2 or more concentric seal elements having confronting ends that are out of registration. The seal elements are adapted to be placed in use in sealing relationship with one element at least partially encircling the other. An independent claim is also included for a method for sealing a pipe in a hole formed in wall using a seal comprising applying a first seal element around the pipe adjacent to the wall, applying a second or subsequent seal element at least partially to encircle the first, and securing the resulting seal to the wall and around the pipe.

US 2005/0229605 A1 discloses a turboprop powerplant with at least a compressor having a forward compressor inlet and a shaft extending axially through the compressor and having a shaft axis, an inlet duct encircling the shaft passing therethrough, the inlet duct having an aft end in gas communication with the compressor inlet and a forward end having at least two branches each with an inlet orifice, each inlet orifice having a centroid in a radial plane through and transverse to the shaft axis, the centroids and shaft axis defining an angle less than 180°.

Aspects of the invention may address one or more shortcomings of the art with solution(s) as set forth in the independent claim(s) and the refinements of the dependent claims.

### BRIEF DESCRIPTION

The invention is defined by claim 1. Preferred aspects of the invention are defined in the dependent claims.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is an illustration of an embodiment of a rotary winged aircraft;
FIG. 2 is a perspective view of an embodiment of an engine inlet duct layout for a rotary winged aircraft;
FIG. 3 is another perspective view of an embodiment of an engine inlet duct layout for a rotary winged aircraft; and
FIG. 4 is a cross-sectional view of an embodiment of an engine inlet duct layout.

The detailed description explains embodiments of the invention, together with advantages and features, by way of example with reference to the drawings.

### DETAILED DESCRIPTION

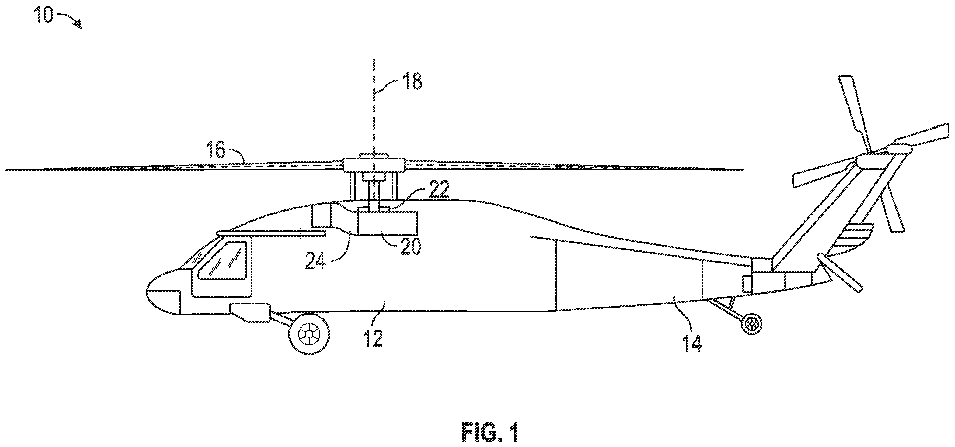

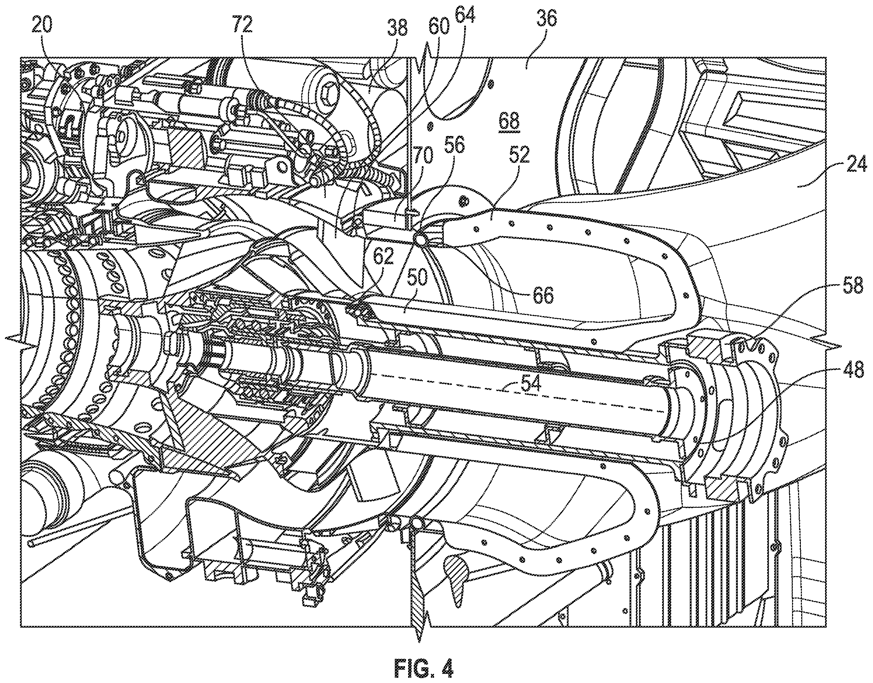

Shown in FIG. 1 is a schematic view of an embodiment of a rotary wing aircraft, in this embodiment a helicopter 10. The helicopter 10 includes an airframe 12 with an extending tail 14. A rotor assembly 16 is located at the airframe 12 and rotates about a main rotor axis 18. The main rotor assembly 16 is driven by an engine 20 via a gearbox 22. To supply airflow to the engine 20, an air inlet duct 24 is provided to direct the airflow to an engine inlet (FIG. 4).

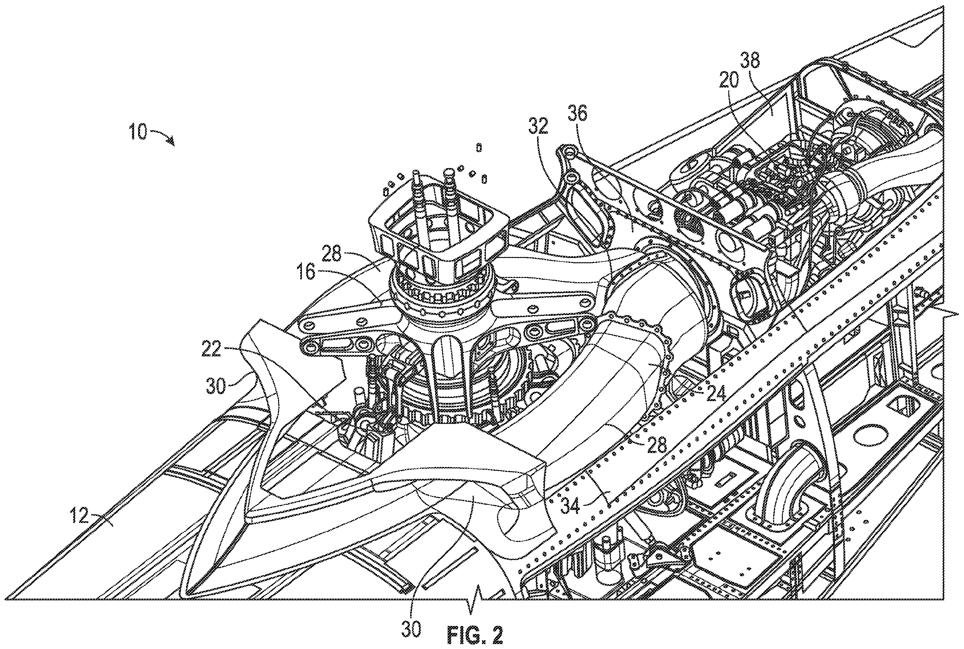

Referring to FIG. 2, the inlet duct 24 is bifurcated, with duct legs 28 each extending from an inlet opening 30 at each lateral side of the airframe 12 to a single duct outlet 32 at the engine 20. The inlet duct 24 extends through a portion of the airframe 12 referred to as a main rotor pylon (MRP) 34. The MRP 34 houses the gearbox 22 for the main rotor assembly 16, which is operably connected to the engine 20. The inlet duct 24 is bifurcated at least in part to route the inlet duct 24 around the gearbox 22 and the main rotor assembly 16. The MRP 34 is bounded longitudinally by the inlet openings 30 and an engine compartment firewall 36 separating the MRP 34 from an engine compartment 38 at which the engine 20 is located.

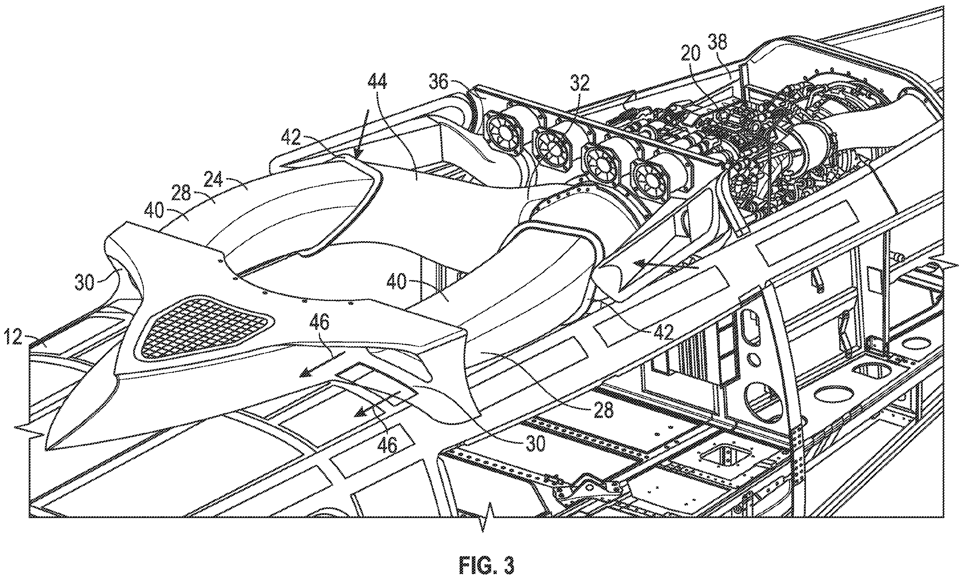

Referring to FIG. 3, each duct leg 28 may be segmented, having a forward segment 40 extending from the inlet opening 30, for example to a midspan point 42, and a rear segment 44 extending from the midspan point 42 to the duct outlet 32. The forward segment 40 is joined to the rear segment 44 at the midspan point 42 by, for example, a plurality of mechanical fasteners (not shown) with a seal or gasket to seal between the forward segment 40 and the rear segment 44 to prevent leakage into and/or out of the inlet duct 24 at the midspan point 42. Segmenting the duct legs 28 increases ease of installation of the inlet duct 24, particularly of inlet ducts 24 having long spans, and also allows for inspection of the inlet duct 24 interior by removal of one of the segments. The duct legs 28 are fixed at the inlet openings 30 with mechanical fasteners, such as screws 46, with a gasket (not shown) to seal between the inlet opening 30 and the duct leg 28 to prevent airflow leakage.

Referring now to FIG. 4, the engine 20 is connected to the gearbox 22 by a rotating engine shaft 48, with the inlet duct 24 surrounding the engine shaft 48. In cross-section, as shown in FIG. 4, the inlet duct 24 has a radially inboard leg 50 and a radially outboard leg 52, relative to an engine shaft axis 54. The inlet duct 24 extends into the engine compartment 38 through a firewall opening 56 in the firewall 36. The inlet duct 24 has a floating interface with the engine 20 and terminates forward of and is not fixedly secured thereto. The radially inboard leg 50 is sealed to a shaft support 58 through which the engine shaft 48 passes, via an inboard gasket 62, and the radially outboard leg 52 is sealed to the engine firewall via an outboard bulb seal 66. These two seals 62 and 66 prevent air leakage past the firewall 36 from the forward compartment into the engine 20. Further, a flexible bellows 70 is provided in the engine compartment 38. The bellows 70 is formed from a high-temperature/fire tolerant material such as titanium. The bellows 70 extends circumferentially around the inlet duct 24 radially outboard of the radially outboard leg 52 and extends from an engine compartment side of the firewall 36 to a front frame 72 of the engine 20. The bellows 70 provides a flexible seal between the firewall 36 and the engine 20 to prevent engine compartment air from being ingested into the engine inlet 60 via any gaps between the inlet duct 24 and the engine inlet 60. Similarly, the bellows 70 prevents leakage of inlet duct airflow into the engine compartment 38. Leakage of inlet duct air into the engine compartment 38 and/or ingestion of high temperature engine compartment airflow into the engine inlet 60, reduces engine performance and results in a reduction of power.

The floating installation of the inlet duct 24 at the engine 20 prevents installation issues resulting from manufacturing or assembly tolerance stackup issues between the various components. Further, the installation scheme reduces stresses on the inlet duct 24 or the engine 20 resulting from airframe 12 deflection during operation of the helicopter 10. Further, the floating interface increases ease of installation of the inlet duct 24, as the installation location at the engine inlet 60 is often difficult to access with installation tools.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotary winged aircraft (10), comprising:
an airframe (12);
a main rotor assembly (16);
an engine (20) disposed at the airframe (12) and operably connected to the main rotor assembly (16) to drive the main rotor assembly (16);
a firewall (36) through which an inlet duct (24) can extend into an engine compartment (38) of the aircraft (10); and
an engine inlet assembly comprising:
the inlet duct (24) which includes a first inlet duct leg (28,50) and a second inlet duct leg (28,52), the first inlet duct leg and the second inlet duct leg extending toward a common inlet duct outlet (32) disposed at an engine inlet;
wherein the first inlet duct leg and the second inlet duct leg are fixedly secured to the airframe (12) of the aircraft (10) at an air inlet,
wherein the inlet duct (24) extends through an opening (56) in the firewall (36) into an engine compartment (38) of the aircraft (10),
wherein the inlet duct outlet (32) has a floating interface with the engine inlet and the inlet duct (24) is configured to direct an airflow to the engine inlet, and
wherein the firewall (36) has an airtight seal to the engine inlet radially outboard on the inlet duct (24) via a flexible bellows seal (70) to prevent ingestion of an engine compartment (38) airflow into the engine inlet.

2. The aircraft of claim 1, wherein the engine inlet assembly further comprises a bulb seal (66) disposed at the firewall (36) to seal between an exterior of the inlet duct (24) and a firewall opening (56).

3. The aircraft of claim 2, wherein the inlet duct (24) is partially supported by the bulb seal (66) at the firewall (36).

4. The aircraft of claim 1, wherein the inlet duct (24) at least partially surrounds an engine shaft (48) and is sealed with a gasket (62) to a shaft support (58) to seal at the interior of the inlet duct (24).

5. The aircraft of claim 1, wherein each inlet duct leg (28, 50, 52) is segmented between the air inlet and the duct outlet (32).

6. The aircraft of claim 1, wherein the inlet duct (24) at least partially surrounds and is sealed to an engine shaft (48) support connecting the engine (20) to the main rotor assembly (16).

7. The aircraft or claim 2, wherein the inlet duct is partially supported by the bulb seal (66) disposed at the firewall (36).

8. The aircraft of claim 1, wherein each inlet duct leg (28, 50, 52) is segmented between the air inlet and the duct outlet (32).

9. The aircraft of claim 1, wherein the first inlet duct leg (50) and the second inlet duct leg (52) are disposed at opposing sides of the main rotor assembly (16).

## Patentansprüche

1. Drehflügelluftfahrzeug (10), umfassend:
ein Flugwerk (12);
eine Hauptrotorbaugruppe (16);
einen Motor (20), der an dem Flugwerk (12) angeordnet und mit der Hauptrotorbaugruppe (16) wirkverbunden ist, um die Hauptrotorbaugruppe (16) anzutreiben;
eine Feuerwand (36), durch die sich ein Einlasskanal (24) in einen Motorraum (38) des Luftfahrzeugs (10) erstrecken kann; und eine Motoreinlassbaugruppe, umfassend:
den Einlasskanal (24), der eine erste Einlasskanalstrecke (28, 50) und eine zweite Einlasskanalstrecke (28, 52) beinhaltet, wobei sich die erste Einlasskanalstrecke und die zweite Einlasskanalstrecke in Richtung eines gemeinsamen Einlasskanalauslasses (32) erstrecken, der an einem Motoreinlass angeordnet ist; wobei die erste Einlasskanalstrecke und die zweite Einlasskanalstrecke fest an dem Flugwerk (12) des Luftfahrzeugs (10) an einem Lufteinlass befestigt sind, wobei sich der Einlasskanal (24) durch eine Öffnung (56) in der Feuerwand (36) in einen Motorraum (38) des Luftfahrzeugs (10) erstreckt,
wobei der Einlasskanalauslass (32) eine schwebende Schnittstelle mit dem Motoreinlass aufweist und der Einlasskanal (24) konfiguriert ist, um einen Luftstrom zu dem Motoreinlass zu lenken, und
wobei die Feuerwand (36) eine luftdichte Dichtung an dem Motoreinlass radial außerhalb an dem Einlasskanal (24) über eine flexible Balgdichtung (70) aufweist, um Aufnahme eines Luftstroms des Motorraums (38) in den Motoreinlass zu verhindern.

2. Luftfahrzeug nach Anspruch 1, wobei die Motoreinlassbaugruppe ferner eine Wulstdichtung (66) umfasst, die an der Feuerwand (36) angeordnet ist, um zwischen einem Äußeren des Einlasskanals (24) und einer Feuerwandöffnung (56) abzudichten.

3. Luftfahrzeug nach Anspruch 2, wobei der Einlasskanal (24) teilweise durch die Wulstdichtung (66) an der Feuerwand (36) getragen wird.

4. Luftfahrzeug nach Anspruch 1, wobei der Einlasskanal (24) eine Motorwelle (48) zumindest teilweise umgibt und mit einer Abdichtung (62) an einem Wellenträger (58) abgedichtet ist, um an dem Inneren des Einlasskanals (24) abzudichten.

5. Luftfahrzeug nach Anspruch 1, wobei jede Einlasskanalstrecke (28, 50, 52) zwischen dem Lufteinlass und dem Kanalauslass (32) segmentiert ist.

6. Luftfahrzeug nach Anspruch 1, wobei der Einlasskanal (24) einen Träger der Motorwelle (48), der den Motor (20) mit der Hauptrotorbaugruppe (16) verbindet, zumindest teilweise umgibt und daran abgedichtet ist.

7. Luftfahrzeug nach Anspruch 2, wobei der Einlasskanal teilweise durch die Wulstdichtung (66) getragen wird, die an der Feuerwand (36) angeordnet ist.

8. Luftfahrzeug nach Anspruch 1, wobei jede Einlasskanalstrecke (28, 50, 52) zwischen dem Lufteinlass und dem Kanalauslass (32) segmentiert ist.

9. Luftfahrzeug nach Anspruch 1, wobei die erste Einlasskanalstrecke (50) und die zweite Einlasskanalstrecke (52) auf gegenüberliegenden Seiten der Hauptrotorbaugruppe (16) angeordnet sind.

## Revendications

1. Aéronef à voilure tournante (10), comprenant :
une cellule (12) ;
un ensemble rotor principal (16) ;
un moteur (20) disposé au niveau de la cellule (12) et relié de manière fonctionnelle à l'ensemble rotor principal (16) pour entraîner l'ensemble rotor principal (16) ;
un pare-feu (36) à travers lequel un conduit d'entrée (24) peut s'étendre dans un compartiment de moteur (38) de l'aéronef (10) ; et
un ensemble entrée de moteur comprenant :
le conduit d'entrée (24) qui comporte une première branche de conduit d'entrée (28, 50) et une seconde branche de conduit d'entrée (28, 52), la première branche de conduit d'entrée et la seconde branche de conduit d'entrée s'étendant vers une sortie de conduit d'entrée commune (32) disposée au niveau d'une entrée de moteur ; dans lequel la première branche de conduit d'entrée et la seconde branche de conduit d'entrée sont solidement fixées à la cellule (12) de l'aéronef (10) au niveau d'une entrée d'air,
dans lequel le conduit d'entrée (24) s'étend à travers une ouverture (56) dans le pare-feu (36) dans un compartiment de moteur (38) de l'aéronef (10),
dans lequel la sortie de conduit d'entrée (32) a une interface de flottement avec l'entrée de moteur et le conduit d'entrée (24) est configuré pour diriger un écoulement d'air vers l'entrée de moteur, et
dans lequel le pare-feu (36) a une fermeture hermétique à l'entrée de moteur radialement vers l'extérieur sur le conduit d'entrée (24) par l'intermédiaire d'un soufflet d'étanchéité, flexible (70) pour empêcher l'ingestion d'un écoulement d'air de compartiment de moteur (38) dans l'entrée de moteur.

2. Aéronef selon la revendication 1, dans lequel l'ensemble entrée de moteur comprend en outre un joint d'ampoule (66) disposé au niveau du pare-feu (36) pour assurer l'étanchéité entre un extérieur du conduit d'entrée (24) et une ouverture de pare-feu (56) .

3. Aéronef selon la revendication 2, dans lequel le conduit d'entrée (24) est partiellement supporté par le joint d'ampoule (66) au niveau du pare-feu (36).

4. Aéronef selon la revendication 1, dans lequel le conduit d'entrée (24) entoure au moins partiellement un arbre de moteur (48) et est scellé par une garniture (62) sur un support d'arbre (58) afin d'assurer l'étanchéité à l'intérieur du conduit d'entrée (24) .

5. Aéronef selon la revendication 1, dans lequel chaque branche de conduit d'entrée (28, 50, 52) est segmentée entre l'entrée d'air et la sortie de conduit (32).

6. Aéronef selon la revendication 1, dans lequel le conduit d'entrée (24) entoure au moins partiellement et est scellé au niveau d'un support d'arbre de moteur (48) reliant le moteur (20) à l'ensemble rotor principal (16).

7. Aéronef selon la revendication 2, dans lequel le conduit d'entrée est partiellement supporté par le joint d'ampoule (66) disposé au niveau du pare-feu (36).

8. Aéronef selon la revendication 1, dans lequel chaque branche de conduit d'entrée (28, 50, 52) est segmentée entre l'entrée d'air et la sortie de conduit (32).

9. Aéronef selon la revendication 1, dans lequel la première branche de conduit d'entrée (50) et la seconde branche de conduit d'entrée (52) sont disposées à des côtés opposés de l'ensemble rotor principal (16).
